# EUROPEAN PATENT SPECIFICATION

(11) **EP 2 014 931 B1**
(45) Date of publication and mention of the grant of the patent: **30.06.2010**
(21) Application number: 08154076.7
(22) Date of filing: 04.04.2008
(51) Int. Cl.: F16B 25/10, F16B 35/04

(54) **Fastener with removable element**
Befestigungselement mit abnehmbarem Teil
Dispositif de fixation à partie amovible

(43) Date of publication of application: 14.01.2009
(73) Proprietor: Chuang, Shu-Yun, Lijhu Township 821 (TW); Tseng, Yu-Sheng, Lijhu Township 821 (TW)
(72) Inventor: Chuang, Shu-Yun, Lijhu Township 821 (TW); Tseng, Yu-Sheng, Lijhu Township 821 (TW)
(74) Representative: Chaillot, Geneviève

(56) References cited:
- EP-A- 0 049 218
- EP-A- 1 180 606
- DE-U1- 20 121 563
- JP-A- 2 186 114
- JP-A- 59 017 011
- US-A1- 2008 056 845

## Description

### BACKGROUND OF THE INVENTION

### 1. Field of the Invention

The present invention relates to a fastener, in particular to a screw with removable element.

### 2. Description of the Related Art

One such fastener is disclosed in US 2008/0086845.

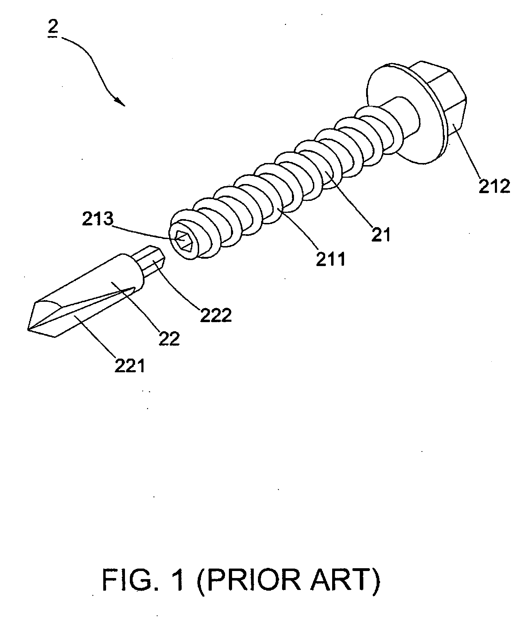

Referring to Fig. **1****,** a screw **2** includes a shank **21** and a tip section **22.** The shank **21** fabricated of a stainless steel comprises a plurality of threads **211** spirally arranged thereon, a head **212** disposed at one end thereof, and a polygonal recess **213** at the other end. A tip section **22** made of another kind of harden metal respectively forms a drilling portion **221** and an insertion **222** at both ends thereof. Particularly, the tip section **22** can be removed from the shank **21** and repeatedly used after securing the objects to the roof, and users simply put a tool (not shown) into the recess **213** to reversely tighten or loosen the screw **2** without climbing on the roof very often.

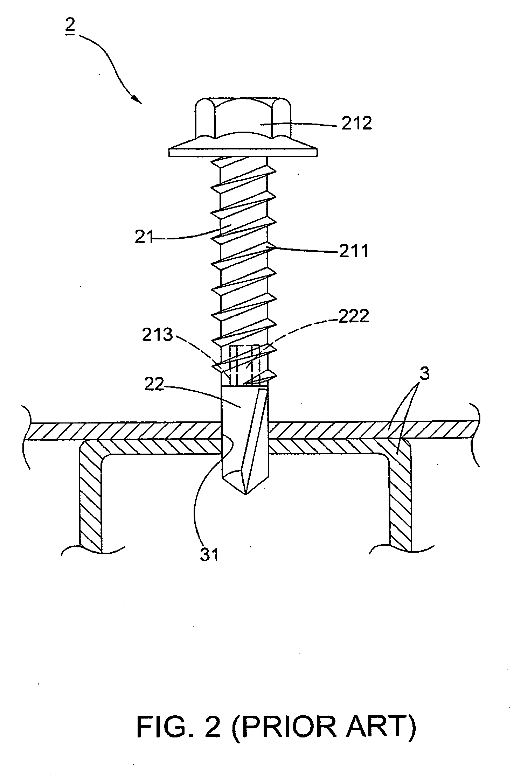

As seen in Fig. **2****,** in practical, the insertion **222** is initially put into the recess **213,** and then the tip section **22** forms a track **31** through the metal obj ects **3** while rotating the head **212 ;** nevertheless, the shank **21** may not entirely follow the track **31** under the impediment of the diameter of threads **221** and the restriction of the shank **21** made of soft materials, and which results in hesitating the movement of the screws **2** at the connection of the shank **21** and the tip section **22** and making the screw **2** unable to be substantially drilled into the obj ects **3.** Threads **211** are facilely broken under the forced drilling although successfully screwing the screw **2** therein.

As a further example of a conventional screw, GB 2 365 93 9A discloses a screw which comprises a bolt part and a drill part, respectively formed in different materials, wherein the bolt part has an internal bore formed at the free end thereof, and the drill part provides with a tap section and a stub shaft extending axially therefrom. Therefore, the bolt part and the drill part are attached together by fitting the stub shaft into the bore.

As another example of a conventional screw, US 2 993 950 discloses a fastener including a core element, a body element formed thereon by molding, a plug element connected to the core element, and a tapping element fitting with the body element, wherein, the core element has respective first, second ends formed and defines a hollow bore therein; the body element, formed of synthetic resin materials, covers the core elements by molding and has a head and a threaded shank; the plug element has a shank portion with a chamfer portion to permit easy inserted into the first end; the tapping element also provides with shank body, where a tip end is integral formed, a conical body with threads engaged to the shank body, and a free end extended therefrom. Therefore, the free end facilitates insertion and engagement with the second end of the core element.

### SUMMARY OF THE INVENTION

Therefore, the present invention intends to provide a screw with removable element which is conducive to substantially drive the screw into metal objects and increase the convenience of using.

The present invention relates to a screw according to claim 1 comprising a shank and a tip section which are made of different materials, wherein the shank includes a first threaded section consisting of threaded sections, and an insertion of the tip section has a coincident shape with a recess defined on the end face of the shank. Further the tip section may have a second threaded section disposed thereon, an insertion, and a drilling portion. The above threaded sections and the drilling portion respectively have different major diameters. In use, the drilling portion enlarges bores through the metal obj ects and provides guidance for the first threaded section to be gradually drilled into the hole from the threaded section with a smaller outer diameter toward the threaded section with a larger outer diameter, thereby assisting the screw to be firmly fixed therein without swing and preventing from damaging the first threaded section. Further, the insertion can be removed away and a wrench is used instead to loosen or tighten the screw, hence increasing the convenience of using.

The advantages of the present invention over the known prior arts will become more apparent to those of ordinary skilled in the art by reading the following descriptions with the relating drawings.

### BRIEF DESCRIPTION OF THE DRAWINGS

Fig. 1 is a perspective view showing a conventional screw;
Fig. 2 is a schematic view showing the screw of Fig. 1 drilled into the metal objects;
Fig.3 is a perspective view showing a first preferred embodiment of the present invention;
**Fig. 4** is a schematic view showing the first preferred embodiment in use;
**Fig. 5** is a perspective view showing a second preferred embodiment of the present invention; and
Fig. 6 is a schematic view showing the screw of the second preferred embodiment in time of screwing into the metal objects.

### DETAILED DESCRIPTION OF THE PREFERRED EMBODIMENTS

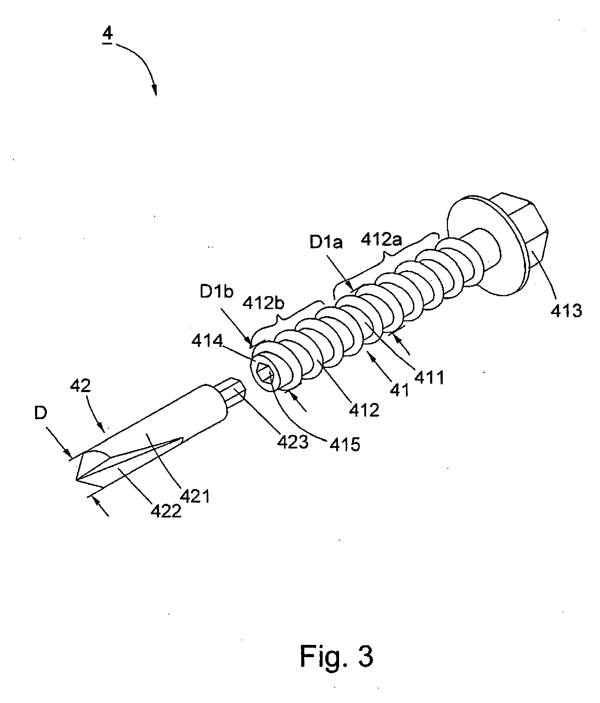

Referring to Fig. **3****,** a fastener **4** (e.g. screw **4)** of a first preferred embodiment comprises a shank **41** and a tip section **42;** the shank **41** made of a kind of metal material, for instance of a stainless steel, comprises a shank body **411,** a first threaded section **412** extending around the shank body **411,** a head **413** disposed at one end of the shank body **411,** and an end face **414** disposed at the other end thereof, opposite to the head **413;** wherein the first threaded section **412** includes an upper threaded section **412a** located adjacent to the head **413** and a lower threaded section **412b** located adjacent to the end face **414,** and an outer diameter **"D1a"** of the upper threaded section **412a** is greater than an outer diameter **"D1b"** of the lower threaded section **412b.** Further the end face **414** has a recess **415** defined on the surface thereof, and the recess **415** formed in a polygonal contour, e.g. a hexagonal shape, is applied to the preferred embodiments.

Still further, the tip section **42** made of another kind of harden metal material includes a tip body **421,** for instance of a carbon steel, a drilling portion **422** disposed at one end thereof, and an insertion **423** extending axially from the other end thereof. Wherein, the drilling portion **422** has an outer diameter greater "D" than the outer diameter **"D1b"** of the lower threaded section **"412b"** but smaller than the outer diameter **"D1a"** of said upper threaded section **"412a";** further, the insertion **423** has a polygonal contour and herein a hexagonal pillar is adopted so that the insertion **423** accurately fits with the recess **415.**

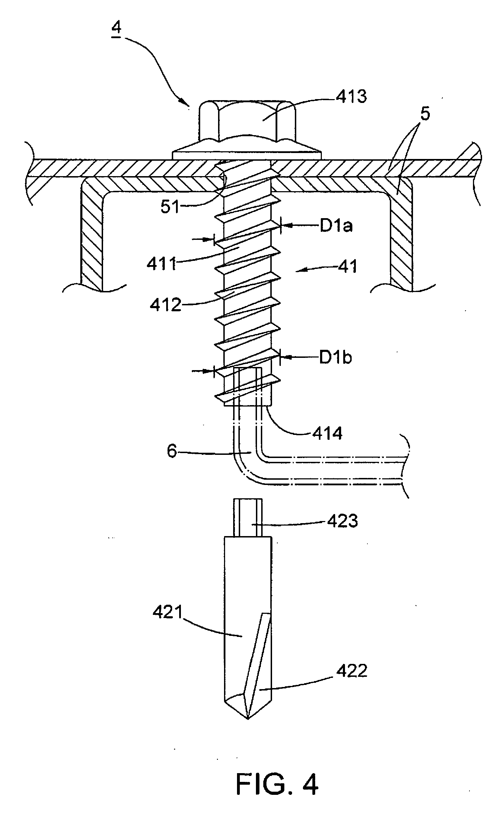

Referring to Fig. **3** and **4****,** in operation, the screw **4** can function as screwing roofing panels, for instance of screwing metal objects **5.** Before screwing, the insertion **423** is initially put into the recess **415;** further the drilling portion **422** is drilled into the objects **5** by rotating the head **413** and assists in enlarging the drilling track for forming a hole **51** therethrough. When the tip section **42** is entirely drilled therein, the shank body **411** is further gradually guided along the track of the hole **51** into the objects **5** from the lower threaded section **412b** with the smaller outer diameter **"D1b"** toward the upper threaded section **412a,** so as to prevent the screw **4** from being directly interfered or blocked between the shank body **411** and the tip body **421** in time of screwing. Thus, the larger outer diameter **"D1a"** impels the screw **4** to be firmly held by the objects **5** after the shank body **411** is wholly drilled therein. Subsequently, the tip section **42** can be alternatively removed from the recess **415** for a repeated use if necessary and can perform in another use, namely users can work inside the house and exert a wrench **6** to insert into the recess **415** either for loosening or tightening the screw **4** from the objects **5.** Users thus can freely adjust the screw **4** for renewing the objects without climbing on the roof, and which increases the convenience.

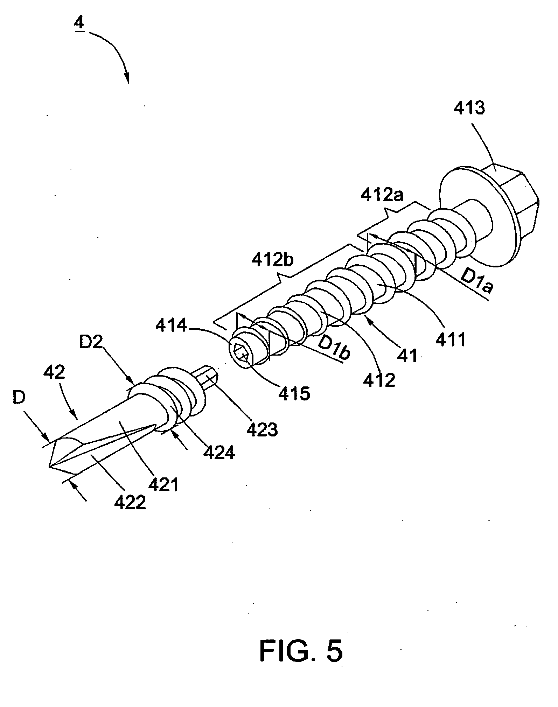

Referring to Fig. **5****,** a screw **4** of a second preferred embodiment still comprises the similar elements, and the operations and the effects are the same as the first embodiment. Particularly; the tip section **42** further provides with a second threaded section **424** spiraled round said tip body **421** and disposed between the tip portion **422** and the insertion **423;** In addition, the above threaded sections **412a, 412b, 424** have the same pitches; further, an outer diameter **"D1a"** of the upper threaded section **412a** is greater than an outer diameter **"D2"** of the second threaded section **424,** and the outer diameter **"D2"** of the second threaded section **424** is thence greater than an outer diameter **"D1b"** of the lower threaded section **412b,** and the drilling portion **422** substantially has its outer diameter **"D"** greater than the diameter **"D1b"** but smaller than the diameter **"D2".**

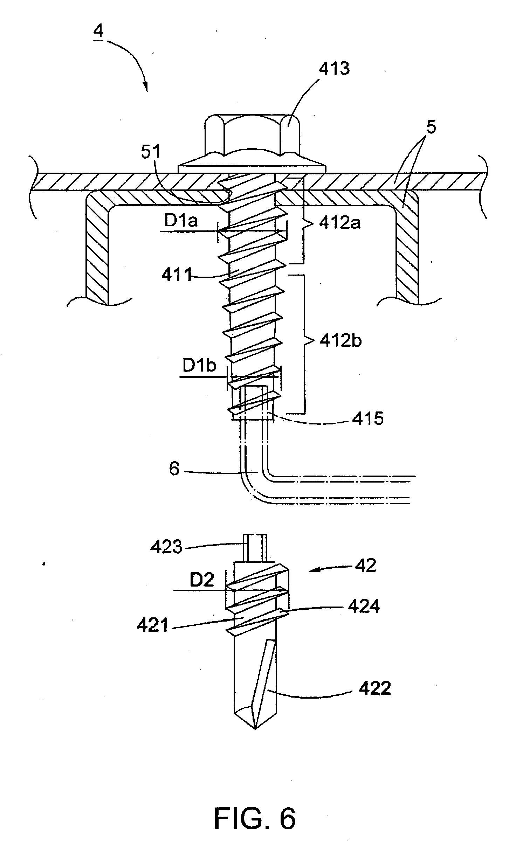

Referring to Fig. **5** and **6****,** the drilling portion **422** initially bores through the metal objects **5,** and the second threaded section **424** assists in forming a bigger hole **51** so that the lower threaded section **412b** can also be smoothly driven into the objects **5** along the hole **51** without being interrupted. While drilling from the lower threaded section **412b** toward the upper threaded section **412a,** the upper threaded section **412a** is secured into the objects **5** to result of the screw **4** being firmly fixed therein and enhancing the screwing stability.

To sum up, the present invention takes advantage of the shank having a first threaded section with different outer diameters and the tip section which may also include a second threaded section spiraling thereon and a drilling portion with larger diameters than the lower threaded section. In use, the shank can be smoothly driven into the obj ects along the screwing track by the above threaded sections and the drilling portion, so that the screw is substantially drilled into the objects without impediment and fixed therein without swing and breaking the first threaded section, thus retaining a good screwing stability. After screwing, a wrench can be used instead of the tip section to insert into the recess for loosing or tightening the screw, thereby increasing the convenience of using.

While we have shown and described the embodiment in accordance with the present invention, it should be clear to those skilled in the art that further embodiments may be made without departing from the scope of the present invention. as defined in the claims.

## Claims

1. A screw (4) with removable element comprising;
a shank (41); wherein, said shank (41) comprises a shank body (411), a first threaded section (412) helically disposed on said shank body (411), a head (413) disposed at one end of said shank body (411), and an end face (414) disposed at the other end thereof, opposite to said head (413);
a tip section (42) ; wherein said shank (41) and said tip section (42) are fabricated of different materials; said tip section (42) comprising a tip body (421), a drilling portion (422) disposed at one end of said tip body (421); and
said first threaded section (412) having an upper threaded section (412a) located adjacent to said head (413) and a lower threaded section (412b) located adjacent to said end face (414); said tip section (42) being the removable element and comprises an insertion (423) coaxially extending from the other end of said tip body (421), to be inserted into a recess (415) defined on said end face (414) of said shank (41), said recess being adapted to also be used with a wrench to loosen or tighten the screw;
**characterized in that** said drilling portion (422) has an outer diameter (D) smaller than an outer diameter (D1a) of said upper threaded section (412a) and greater than an outer diameter (D1b) of said lower threaded section (412b).

2. The screw as claimed in claim 1, wherein said recess (415) on said shank body (411) and said insertion (423) of said tip body (421) are respectively formed with polygonal contours, whereby said insertion (423) can be formed complementary to said recess (415),

3. The screw as claimed in claim 1, wherein said material of said tip section (42) is harder than said material of said shank (41).

4. The screw as claimed in claim 1, wherein said tip section (41) is further provided with a second threaded section (424) spiraled round said tip body (421) and disposed between said drilling portion (422) and said insertion (423).

5. The screw as claimed in claim 4, wherein said threaded sections (412a, 412b, 424) have the same pitches and respective outer diameters (D1a, D1b, D2); said outer diameter (D1a) of said upper threaded section (412a) is greater than said outer diameter (D2) of said second threaded section (424), and said outer diameter (D2) of said second threaded section (424) is greater than said outer diameter (D1b) of said lower threaded section (412b).

6. The screw as claimed in claim 5, wherein; said drilling portion (422) has said outer diameter (D) sized between said outer diameter (D2) of said second threaded section (424) and said outer diameter (D1b) of said lower threaded section (412b).

## Patentansprüche

1. - Schraube (4) mit einem abnehmbaren Element, aufweisend :
einen Schaft (41), enthaltend einen Schaftkörper (411), einen spiralförmig auf dem Schaftkörper (411) angeordneten ersten Gewindeabschnitt (412), einen an einem Ende des Schaftkörpers (411) angeordneten Kopf (413), und eine Endseite (414), die am anderen Ende des Schaftkörpers (411) gegenüber den Kopf (413) angeordnet ist;
einen Spitzenabschnitt (42), wobei der Schaft (41) und der Spitzenabschnitt (42) aus verschiedenen Stoffen hergestellt werden und der Spitzenabschnitt (42) einen Spitzenkörper (421) und ein an einem Ende des Spitzenkörpers angeordnetes Bohrteil (422) aufweist; und
wobei der erste Gewindeabschnitt (412) einen an den Kopf (413) angrenzenden oberen Gewindeabschnitt (412a) und einen an die Endseite (414) angrenzenden unteren Gewindeabschnitt (412b) aufweist;
wobei der Spitzenabschnitt (42) das abnehmbare Element ist und einen aus dem anderen Ende des Spitzenkörper (421) koaxial erstreckenden Einsatz (423) aufweist, der in eine auf der Endseite (414) des Schafts (41) ausgebildete Ausnehmung (415) eingeführt werden soll, wobei die Ausnehmung auch zur Verwendung mit einem Schraubenschlüssel zum Lösen oder zum Anziehen der Schraube ausgebildet ist;
**dadurch gekennzeichnet, dass** der Außendurchmesser (D) des Bohrteils (422) kleiner als der Außendurchmesser (D1a) des oberen Gewindeabschnitts (412a) und größer als der Außendurchmesser (D1b) des unteren Gewindeabschnitts (412b) ist.

2. - Schraube nach Anspruch 1, wobei die Aufnehmung (415) auf dem Schafkörper (411) und der Einsatz (423) des Spitzenkörpers (421) jeweils mit polygonalen Konturen ausgebildet sein, wodurch der Einsatz (423) komplementär zur Ausnehmung ausgebildet werden kann.

3. - Schraube nach Anspruch 1, wobei der Stoff des Spitzenabschnitts (42) härter als der Stoff des Schafts (41) ist.

4. - Schraube nach Anspruch 1, wobei der Spitzenabschnitt (41) zusätzlich einen um den Spitzenkörper (421) spiralförmig abgeordneten zweiten Gewindeabschnitt (424) aufweist, der zwischen dem Bohrteil (422) und dem Einsatz (423) angeordnet ist.

5. - Schraube nach Anspruch 4, wobei die Gewindeabschnitte (412a, 412b, 424) die selben Steigungen und jeweilige Außendurchmesser (D1a, D1b, D2) haben; wobei der Außendurchmesser (D1a) des oberen Gewindeabschnitts (412a) größer als der Außendurchmesser (D2) des zweiten Gewindeabschnitts (424) ist, und der Außendurchmesser (D2) des zweiten Gewindeabschnitts (424) größer als der Außendurchmesser (D1b) des unteren Gewindeabschnitts (412b) ist.

6. - Schraube nach Anspruch 5, wobei die Größe des Außendurchmessers (D) des Bohrteils (422) zwischen dem Außendurchmesser (D2) des zweiten Gewindeabschnitts (424) und dem Außendurchmesser (D1b) des unteren Gewindeabschnitts (424) ist.

## Revendications

1. - Vis (4) avec élément amovible comprenant:
une tige (41); ladite tige (41) comprenant un corps de tige (411), une première section filetée (412) disposée en hélice sur ledit corps de tige (411), une tête (413) disposée à une extrémité dudit corps de tige (411), et une face terminale (414) disposée à l'autre extrémité de celui-ci, à l'opposé de ladite tête (413);
une section de pointe (42) ; ladite tige (41) et ladite section de pointe (42) étant fabriquées dans des matériaux différents; ladite section de pointe (42) comprenant un corps de pointe (421), une partie de perçage (422) disposée à une extrémité dudit corps de pointe (421); et
ladite première section filetée (412) ayant une section filetée supérieure (412a) située adjacente à ladite tête (413) et une section filetée inférieure (412b) située adjacente à ladite face terminale (414);
ladite section de pointe (42) étant l'élément amovible et comprenant un insert (423) s'étendant coaxialement à partir de l'autre extrémité dudit corps de pointe (421), pour être inséré dans une cavité (415) définie sur ladite face terminale (414) de ladite tige (41), ladite cavité étant apte à être également utilisée avec une clé pour desserrer ou serrer la vis;
**caractérisée par le fait que** ladite partie de perçage (422) a un diamètre externe (D) inférieur au diamètre externe (D1a) de ladite section filetée supérieure (412a) et supérieur au diamètre externe (D1b) de ladite section filetée inférieure (412b).

2. - Vis selon la revendication 1, dans laquelle ladite cavité (415) sur ledit corps de tige (411) et ledit insert (423) dudit corps de pointe (421) sont formés respectivement avec des contours polygonaux, ce par quoi ledit insert (423) peut être formé de façon complémentaire à ladite cavité (415).

3. - Vis selon la revendication 1, dans laquelle ledit matériau de ladite section de pointe (42) est plus dur que ledit matériau de ladite tige (41).

4. - Vis selon la revendication 1, dans laquelle ladite section de pointe (41) comporte de plus une seconde section filetée (424) enroulée en spirale autour dudit corps de pointe (421) et disposée entre ladite partie de perçage (422) et ledit insert (423).

5. - Vis selon la revendication 4, dans laquelle lesdites sections filetées (412a, 412b, 424) ont les mêmes pas et des diamètres externes respectifs (D1a, D1b, D2), ledit diamètre externe (D1a) de ladite section filetée supérieure (412a) étant supérieur audit diamètre externe (D2) de ladite seconde section filetée (424), et ledit diamètre externe (D2) de ladite seconde section filetée (424) étant supérieur audit diamètre externe (D1b) de ladite section filetée inférieure (412b) .

6. - Vis selon la revendication 5, dans laquelle ledit diamètre externe (D) de ladite partie de perçage (422) a une dimension située entre celle dudit diamètre externe (D2) de la dite seconde section filetée (424) et celle dudit diamètre externe (D1b) de ladite section filetée inférieure (412b).
